# EUROPÄISCHE PATENTSCHRIFT

(11) **EP 2 174 393 B1**
(45) Veröffentlichungstag und Bekanntmachung des Hinweises auf die Patenterteilung: **16.03.2011**
(21) Anmeldenummer: 08774958.6
(22) Anmeldetag: 10.07.2008
(51) Int. Cl.: H02G 1/00

(54) **VERTEILERGEHÄUSE ZUR AUFNAHME VON BAUTEILEN DER ELEKTROINSTALLATION**
DISTRIBUTOR HOUSING FOR ACCOMMODATING ELECTRICAL INSTALLATION COMPONENTS
BOÎTIER DE DISTRIBUTEUR DESTINÉ À RECEVOIR LES ÉLÉMENTS CONSTITUTIFS D'UNE INSTALLATION ÉLECTRIQUE

(30) Priorität: 27.07.2007 DE 102007035185
(43) Veröffentlichungstag der Anmeldung: 14.04.2010
(73) Patentinhaber: Siemens Aktiengesellschaft, 80333 München (DE)
(72) Erfinder: SCHMIDT, Christian, 93346 Ihrlerstein (DE)
(74) Vertreter: Wolff, Harry
(86) Internationale Anmeldenummer: PCT/EP2008/058989
(87) Internationale Veröffentlichungsnummer: WO 2009/016016

(56) Entgegenhaltungen:
- DE-A1- 3 423 152
- DE-U1-202004 001 860

## Beschreibung

Die Erfindung betrifft ein Verteilergehäuse zur Aufnahme von Bauelementen der Elektroinstallation, mit einer Rückseite und einer Vorderseite, wobei das Verteilergehäuse zur Montage auf einer Wand oder zum Einsetzen in eine Wand ausgebildet ist.

Bei der Montage von Verteilergehäusen auf einer Wand oder beim Einsetzen von Verteilergehäusen in eine Wand ist üblicher Weise vorgesehen, dass die Verteilergehäuse in einer Sollorientierung montiert werden. Beispielsweise ist es bei rechteckigen Verteilergehäusen vorgesehen, dass die Verteilergehäuse waagerecht an der Wand befestigt oder in die Wand eingesetzt werden. Eine waagerechte Sollorientierung ist insbesondere aus ästhetischen Gründen gewünscht, da ein bezüglich der Wand schief hängendes Verteilergehäuse den optischen Gesamteindruck der Verteilergehäuse-Wand Kombination stört. Die Druckschrift EP1365491A1 zeigt solche Verteilergehäuse.

Bisher werden Verteilergehäuse in einer Sollorientierung mittels einer Wasserwaage montiert. Mittels einer Wasserwaage können waagerechte aber auch um beliebige Winkel geneigte Sollorientierungen eingestellt werden. Hierzu weist eine Libelle der Wasserwaage beispielsweise Markierungen auf, die jeweils Neigungswinkeln entsprechen.

Die Justage des Verteilergehäuses mittels Wasserwaage umständlich und führt dazu, dass ein Monteur mit einer Hand die Wasserwaage halten und mit der anderen Hand das Verteilergehäuse halten und ausrichten muss. Da eine Hand zum halten und ausrichten insbesondere bei schweren Verteilergehäusen nicht ausreicht, ist eine Montage mit Wasserwaage meist nur mit wenigstens zwei Monteuren möglich. Weiterhin ist das Verwenden einer Wasserwaage bei einer mit der Wand fluchtenden Unterputzmontage von Nachteil, da die Wasserwaage in diesem Fall nicht unmittelbar auf das Verteilergehäuse aufgelegt werden kann.

Der Erfindung liegt die Aufgabe zugrunde, ein vorteilhaftes Verteilergehäuse anzugeben, das ohne Wasserwaage auf oder in einer Wand in einer Sollorientierung montiert werden kann.

Diese Aufgabe wird mit dem Verteilergehäuse gemäß Anspruch 1 gelöst.

Vorteilhafte Ausgestaltungen und Weiterbildungen der Erfindung sind Gegenstand der abhängigen Ansprüche.

Bei dem erfindungsgemäßen Verteilergehäuse zur Aufnahme von Bauelementen der Elektroinstallation, mit einer Rückseite und einer Vorderseite, wobei das Verteilergehäuse zur Montage auf einer Wand oder zum Einsetzen in eine Wand ausgebildet ist, weist die Vorderseite eine erste Markierung auf, die derart ausgebildet ist, dass bei lotgerechter Ausrichtung der Markierung das Verteilergehäuse eine für die Montage oder das Einsetzen vorgesehene Sollorientierung einnimmt.

Die Vorderseite ist einem Monteur bei der Montage auf der Wand und beim Einsetzen in die Wand zugewandt. Die auf der Vorderseite angebrachte und beispielsweise linienförmige Markierung kann lotgerecht, d.h. an einer Lotschnur ausgerichtet werden. Die Linienform der Markierung ist derart auf der Vorderseite orientiert, dass das Verteilergehäuse durch das Ausrichten seine Sollorientierung einnimmt. Sollorientierung und Markierung sind also entsprechend aufeinander abgestimmt.

Eine Sollorientierung ist beispielsweise bei einem rechteckigen Verteilergehäuse eine waagerechte Orientierung der Ober- und Unterseite des Verteilergehäuses. Waagerecht bezieht sich dabei auf eine Ebene parallel zur Wand und/oder auf eine senkrecht zu dieser Ebene verlaufende Ebene. Die Markierung könnte in diesem Fall als senkrecht zu Ober- und Unterseite verlaufende Linie ausgeführt sein. Selbstverständlich kann eine waagerechte Sollorientierung auch für andere Verteilerformen vorgesehen sein. Bei einem beispielsweise dreieckigen Verteilergehäuse kann die Sollorientierung in eine waagerechten Orientierung einer Dreiecksseite bestehen. Die Markierung hätte in diesem Fall beispielsweise eine senkrecht zu der entsprechenden Seite verlaufende Linienform. Durch eine entsprechende Orientierung der Markierung auf der Vorderseite des Verteilergehäuses kann für beliebige Formen des Verteilergehäuses eine gewünschte Sollorientierung beim Ausrichten der Markierung an einer Lotschnur erreicht werden. Hierbei sind selbstverständlich auch von einer waagerechten Orientierung abweichende Orientierungen möglich.

Vorteilhafterweise weist die Vorderseite eine zweite, separate Markierung aufweist, wobei beide Markierungen entlang einer durch beide Markierungen legbaren und hinsichtlich der einzunehmenden Sollorientierung orientierten Geraden liegen.

Durch die zweite Markierung wird die Strecke vergrößert, auf der die lotgerechte Ausrichtung der Markierungen erfolgt. Da die Ausrichtung per Augenmaß erfolgt, führt dies zu einer verringerten Abweichung von der lotgerechten Ausrichtung. Gleichzeitig wird dadurch auch die Genauigkeit erhöht, mit der die Sollorientierung eingenommen wird. Durch das separate Anordnen der zweiten Markierung können beide Markierungen in möglichst großer Entfernung auf der Vorderseite angeordnet werden. Werden zwei Markierungen verwendet, können die Markierungen sowohl linienförmig als auch punktförmig oder kreuzartig sein.

Die Vorderseite kann beispielsweise eine geschlossene Abdeckung des Verteilergehäuses sein und weist beispielsweise einen abnehmbaren Deckel auf. Unter Vorderseite ist aber bei einem Verteilergehäuse ohne montierte Abdeckung auch ein nach vorne zeigender Rand des Verteilergehäuses zu verstehen. Beispielsweise weist ein Verteilergehäuse als Vorderseite einen Rand auf, der eine zum Einbau der Bauteile der Elektroinstallation benötigte Öffnung begrenzt. Der Rand weist beispielsweise selbst Öffnungen auf, in die Befestigungshaken einer das Verteilergehäuse verschließenden Abdeckung einhängbar sind.

Unter Bauelementen der Elektroinstallation sind beispielsweise auf einer Hutschiene montierbare Reiheneinbaugeräte oder auch Stromzähler zu verstehen. Reiheneinbaugeräte sind beispielsweise Leistungsschutzschalter, Leistungsschalter und Fehlerstromschutzschalter.

Gemäß einer ersten Ausgestaltung der Erfindung sind die erste Markierung und/oder die zweite Markierung auf der Oberfläche der Vorderseite aufgebracht. Beispielsweise ist die Markierung auf die Oberfläche aufgemalt, aufgedruckt oder aufgeklebt.

Gemäß einer zweiten Ausgestaltung der Erfindung ist die erste Markierung und/oder die zweite Markierung eine Vertiefung in der Oberfläche der Vorderseite. Wird nur eine Markierung verwendet ist die Vertiefung beispielsweise linienförmig ausgestaltet, während beim Verwenden von zwei Markierungen die Vertiefungen sowohl linienförmig als auch punktförmig, z.B. als Bohrung, oder kreuzförmig ausgestaltet sein können.

Mit Vorteil ist die Vorderseite als Rand des Verteilergehäuses ausgebildet, und die erste Markierung und/oder die zweite Markierung sind auf dem Rand angebracht. Das Verteilergehäuse kann so ohne eine das Verteilergehäuse verschließende Abdeckung montiert oder in eine Wand, d.h. unterputz, eingesetzt und in der Sollorientierung fixiert werden.

Vorteilhafter Weise liegen die erste Markierung und die zweite Markierung in einer Ebene. Verläuft bei lotgerechter Ausrichtung der Markierungen die Lotschnur unmittelbar neben den Markierungen, d.h. berührt die Lotschnur die Markierungen nahezu, wird auf diese Weise das Verteilergehäuse so ausgerichtet, dass es sowohl hinsichtlich der durch die Wand bzw. Wandöffnung gebildeten Ebene als auch hinsichtlich einer senkrecht dazu verlaufenden Ebene in einer waagerechten Sollorientierung ausgerichtet ist. Gleichzeitig kann die Vorderseite des Verteilergehäuses bei einer Unterputzmontage im Wesentlichen fluchtend mit der Wand angeordnet werden, so dass eine Abdeckung des Verteilergehäuses im Wesentlichen auf der Wand aufliegt.

Vorteilhafter Weise weist wenigstens eine der Markierungen eine Öffnung oder ein Zapfen auf, mittels derer ein Lot befestigbar ist, so dass die Markierungen entlang der Lotschnur ausrichtbar sind. Eine gesonderte Befestigungsmöglichkeit für das Lot ist durch diese Weiterbildung entbehrlich. In eine Öffnung, beispielsweise eine Bohrung kann beispielsweise eine Schraube eingesetzt werden, an der die Lotschnur mit Lotgewicht festgebunden werden kann. Die Öffnung kann auch eine Kerbe sein, in die die Lotschnur unmittelbar eingeklemmt werden kann. Auch an einem Zapfen lässt sich die Lotschnur unmittelbar befestigen.

Die Erfindung wird im Folgenden anhand von in den Figuren dargestellten Ausführungsbeispielen näher erläutert. Es zeigen:
- Fig. 1: eine schematische dreidimensionale Darstellung eines Verteilergehäuses mit Markierungen und mit einem mittels einer Öffnung befestigten Lot,
- Fig. 2: eine schematische Ansicht eines Schnitts durch das Verteilergehäuse gemäß Figur 1.

Gleiche Bezugszeichen in den Figuren bezeichnen gleiche Gegenstände.

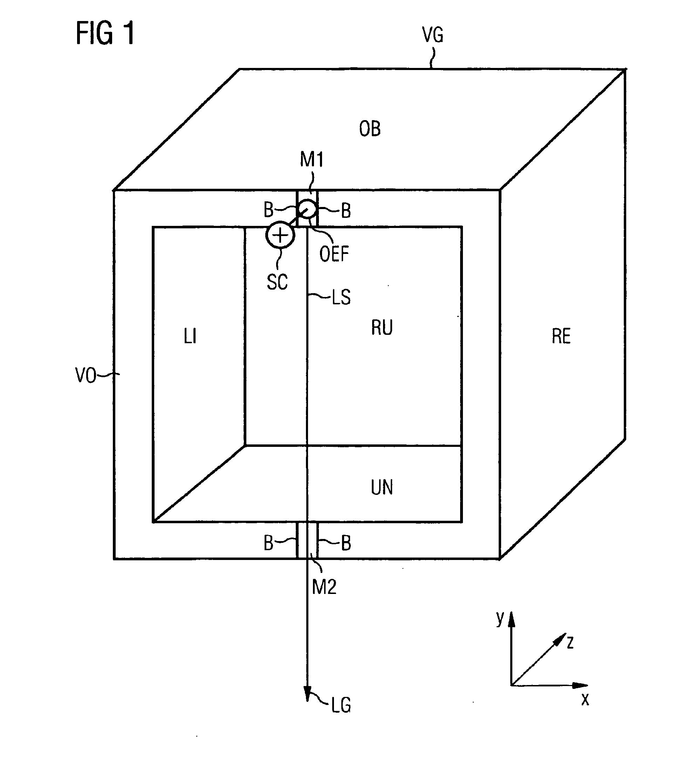

Figur 1 zeigt schematisch ein rechteckiges Verteilergehäuse VG mit einer als Rand ausgebildeten Vorderseite VO, einer Rückseite RU, einer linken Seite LI, einer rechten Seite RE, einer Unterseite UN und einer Oberseite OB. Die Raumachsen werden gemäß dem in der Figur dargestellten Koordinatensystem mit x, y und z bezeichnet.

Das Verteilergehäuse VG weist an der Rückseite RU nicht dargestellte Bohrungen auf, durch die das Verteilergehäuse auf einer Wand montierbar ist. Das Verteilergehäuse VG kann auch in eine entsprechende Öffnung in einer Wand eingeputzt werden. In beiden Fällen soll das Verteilergehäuse in einer Sollorientierung so fixiert werden, dass die Oberseite OB und somit auch die dazu parallele Unterseite UN in x-Richtung waagerecht orientiert sind. Zu diesem Zweck sind an der Vorderseite VO eine erste Markierung M1 und eine zweite Markierung M2 angebracht. Beide Markierungen M1, M2 sind in diesem Ausführungsbeispiel als linienförmige Vertiefungen in der Vorderseite VO ausgeführt, d.h. die Markierungen weisen seitlich parallele Begrenzungslinien B auf. Die Markierungen M1, M2 weisen auch jeweils ihrer Mitte eine parallel zu den Begrenzungslinien B verlaufende Linie auf. Dies kann beispielsweise dadurch erreicht werden, dass die Markierungen M1, M2 als Furchen mit dreieckigem Querschnitt ausgebildet sind. Diese Linien sind aus Gründen der Übersichtlichkeit in Figur 1 nicht dargestellt. Die Markierungen M1, M2 verlaufen in einer durch die Vorderseite VO festgelegten Ebene senkrecht zur Oberseite OB bzw. zur Unterseite UN. Die erste Markierung M1 weist eine als Bohrung ausgeführte Öffnung OEF auf, in die eine Schraube SC eingedreht wurde. Am Schaft der Schraube SC ist eine Lotschnur LS mit daran hängendem Lotgewicht LG befestigt.

Alternativ können die Markierungen auch auf der Oberfläche der Vorderseite beispielsweise als linienförmiger Aufdruck aufgebracht sein.

Durch die senkrechte Orientierung der beiden Markierungen M1, M2 zu der Oberseite OB bzw. der Unterseite UN nimmt das Verteilergehäuse VG seine hinsichtlich der x-Richtung waagerechte Sollorientierung ein, wenn die Lotschnur mittig in beiden Markierungen und somit parallel zu den seitlichen Begrenzungslinien der Markierungen M1, M2 bzw. zu der linken Seite LI und der rechten Seite RE verläuft.

Zur Montage auf einer Wand oder in einer Wand wird das Verteilergehäuse VG durch lotgerechtes Ausrichten der Markierungen M1, M2 in seine hinsichtlich der x-Richtung waagerechte Sollorientierung gebracht und anschließend auf der Wand beispielsweise mittels Schraubverbindungen befestigt oder in einer Öffnung in der Wand eingeputzt.

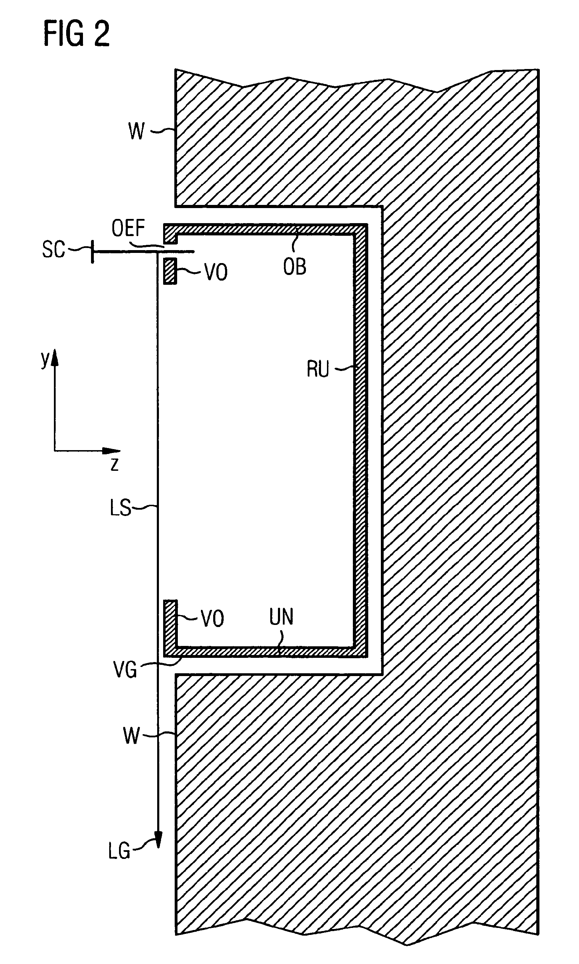

Figur 2 zeigt schematisch eine parallel zur linken Seite LI bzw. zur rechten Seite RE liegende Schnittebene, die durch die Mitte der Markierungen M1, M2 und der Öffnung OEF verläuft. Weiterhin ist eine Wand W mit einer zur Aufnahme des Verteilergehäuses VG vorgesehenen Öffnung schematisch dargestellt. Das Verteilergehäuse VG ist in die Öffnung in der Wand W eingesetzt und wird durch die zuvor beschriebene Ausrichtung der Markierungen M1, M2 an der von der Schraube SC senkrecht nach unten hängenden Lotschnur LS in seine hinsichtlich der x-Richtung waagerechte Sollorientierung gebracht und in der Öffnung der Wand eingeputzt. Die x-Achse verläuft senkrecht zur Zeichenebene.

Das Verteilergehäuse VG kann durch Verwenden eines schmalen Lotgewichts LG im Wesentlichen mit der Wand fluchtend in der Wand eingeputzt werden. Der Überstand kann beispielsweise so bemessen werden, dass eine auf die Vorderseite VO aufgesetzte Abdeckung an der Wand W anliegt. Beim Einsetzen des Verteilergehäuses VG in die Öffnung in der Wand wird die lotgerechte Ausrichtung der Markierungen M1, M2 so durchgeführt, dass die Lotschnur LS die Markierungen M1, M2 nahezu berührt, d.h. gerade so weit neben den Markierungen M1, M2 verläuft, dass die Lotschnur noch frei beweglich ist. Da die Markierungen M1, M2 in einer durch die Vorderseite VO festgelegten Ebene senkrecht zur Oberseite OB bzw. zur Unterseite UN verlaufen, führt eine derartige Ausrichtung der Markierungen M1, M2 dazu, dass das Verteilergehäuse VG mit seiner Vorderseite VO auch parallel zur y-Richtung ausgerichtet ist. Die Vorderseite VO ist somit parallel zur x-y-Ebene. Bei einem rechteckigen Verteilergehäuse VG bedeutet dies, dass die Unterseite UN bzw. die Oberseite OB parallel zur x-z-Ebene sind.

Selbstverständlich kann die Vorderseite auch eine, beispielsweise mit einem Deckel versehene, vorne auf dem Verteilergehäuse angebrachte Abdeckung sein, auf der die Markierungen entsprechend angebracht sind.

Selbstverständlich kann das Verteilergehäuse, wenn auch mit einem größeren Justagefehler, auch in seine Sollorientierung gebracht werden, wenn das Verteilergehäuse nur eine Markierung aufweist bzw. eine Ausrichtung nur anhand einer Markierung erfolgt. Voraussetzung ist lediglich, dass die lotgerecht ausgerichtete Markierung linienförmig ist. Beispielsweise kann die lotgerecht ausgerichtete Markierung eine Linie mit wenigstens 0,5 cm länge sein.

## Patentansprüche

1. Verteilergehäuse (VG) zur Aufnahme von Reiheneinbaugeräten, welche auf einer Hutschiene montierbar sind, mit einer Rückseite (RU) und einer Vorderseite (VO), wobei das Verteilergehäuse(VG) zur Montage auf einer Wand (W) oder zum Einsetzen in eine Wand (W) ausgebildet ist;
**dadurch gekennzeichnet,**
**dass** die Vorderseite (VO) wenigstens eine erste Markierung (M1) aufweist, die derart ausgebildet ist, dass bei lotgerechter Ausrichtung der Markierung (M1) das Verteilergehäuse (VG) eine für die Montage oder das Einsetzen vorgesehene Sollorientierung einnimmt.

2. Verteilergehäuse (VG) nach Anspruch 1,
**dadurch gekennzeichnet,**
**dass** die Vorderseite (VO) eine zweite, separate Markierung (M2) aufweist, wobei beide Markierungen (M1, M2) entlang einer durch beide Markierungen (M1, M2) legbaren und hinsichtlich der einzunehmenden Sollorientierung orientierten Geraden liegen.

3. Verteilergehäuse (VG) nach Anspruch 1 oder 2,
**dadurch gekennzeichnet,**
**dass** die erste Markierung (M1) und/oder die zweite Markierung (M2) auf der Oberfläche der Vorderseite (VO) aufgebracht sind.

4. Verteilergehäuse (VG) nach Anspruch 1 oder 2,
**dadurch gekennzeichnet,**
**dass** die erste Markierung (M1) und/oder die zweite Markierung (M2) eine Vertiefung in der Oberfläche der Vorderseite ist.

5. Verteilergehäuse (VG) nach einem der vorstehenden Ansprüche,
**dadurch gekennzeichnet,**
**dass** die Vorderseite (VO) als Rand des Verteilergehäuses (VG) ausgebildet ist, und dass die erste Markierung (M1) und/oder die zweite Markierung (M2) auf dem Rand angebracht sind.

6. Verteilergehäuse (VG) nach einem der Ansprüche 2 bis 5,
**dadurch gekennzeichnet,**
**dass** die erste Markierung (M1) und die zweite Markierung (M2) in einer Ebene liegen.

7. Verteilergehäuse (VG) nach einem der vorstehenden Ansprüche,
**dadurch gekennzeichnet,**
**dass** wenigstens eine der Markierungen (M1) eine Öffnung (OEF) oder ein Zapfen aufweist, mittels derer ein Lot befestigbar ist, so dass die Markierungen (M1, M2) entlang der Lotschnur ausrichtbar sind.

## Claims

1. Distribution board enclosure (VG) for accommodating modular devices, which can be fitted on a top-hat rail, with a rear side (RU) and a front side (VO), the distribution board enclosure (VG) being designed for being fitted onto a wall (W) or for being inserted into a wall (W), **characterized in that** the front side (VO) has at least one first marking (M1), which is designed such that, given a plumb alignment of the marking (M1), the distribution board enclosure (VG) assumes a desired orientation provided for the fitting or insertion.

2. Distribution board enclosure (VG) according to Claim 1, **characterized in that** the front side (VO) has a second, separate marking (M2), with both markings (M1, M2) lying along a straight line which can be laid by both markings (M1, M2) and is oriented with respect to the desired orientation to be assumed.

3. Distribution board enclosure (VG) according to Claim 1 or 2, **characterized in that** the first marking (M1) and/or the second marking (M2) are applied to the surface of the front side (VO).

4. Distribution board enclosure (VG) according to Claim 1 or 2, **characterized in that** the first marking (M1) and/or the second marking (M2) is a depression in the surface of the front side.

5. Distribution board enclosure (VG) according to one of the preceding claims, **characterized in that** the front side (VO) is in the form of an edge of the distribution board enclosure (VG), and **in that** the first marking (M1) and/or the second marking (M2) is attached to the edge.

6. Distribution board enclosure (VG) according to one of Claims 2 to 5, **characterized in that** the first marking (M1) and the second marking (M2) lie on one plane.

7. Distribution board enclosure (VG) according to one of the preceding claims, **characterized in that** at least one of the markings (M1) has an opening (OEF) or a pin, by means of which a plumb-bob can be fixed, with the result that the markings (M1, M2) can be aligned along the plumb line.

## Revendications

1. Boîtier ( VG ) de distributeur pour la réception d'appareils encastrés en série, qui peuvent être montés sur un profilé chapeau comprenant une face ( RU ) arrière et une face ( VO ) avant, le boîtier ( VG ) de distributeur étant constitué pour le montage sur un mur ( W ) ou pour être inséré dans un mur ( W ),
**caractérisé,**
**en ce que** la face ( VO ) avant a au moins un premier repère ( M1 ) qui est constitué de manière à ce que, lorsque la direction du repère ( M1 ) est à l'aplomb, le boîtier ( VG ) de distributeur prenne une orientation de consigne prévue pour le montage ou pour l'insertion.

2. Boîtier ( VG ) de distributeur suivant la revendication 1, **caractérisé en ce que**,
la face ( VO ) avant a un deuxième repère ( M2 ) distinct, les deux repères ( M1, M2 ) se trouvant sur une droite pouvant passer par les deux repères ( M1, M2 ) et orientée en ce qui concerne l'orientation de consigne à prendre.

3. Boîtier ( VG ) de distributeur suivant la revendication 1 ou 2,
**caractérisé en ce que**,
le premier repère ( M1 ) et/ou le deuxième repère ( M2 ) sont apposés sur la surface de la face ( VO ) avant.

4. Boîtier ( VG ) de distributeur suivant la revendication 1 ou 2,
**caractérisé en ce que**,
le premier repère ( M1 ) et/ou le deuxième repère ( M2 ) sont une cavité dans la surface de la face avant.

5. Boîtier ( VG ) de distributeur suivant l'une des revendications précédentes,
**caractérisé en ce que**,
la face ( VO ) avant est constituée sous la forme d'un bord du boîtier ( VG ) de distributeur et **en ce que** le premier repère ( M1 ) et/ou le deuxième repère ( M2 ) sont mis sur le bord.

6. Boîtier ( VG ) de distributeur suivant l'une des revendications 2 à 5,
**caractérisé en ce que**,
le premier repère ( M1 ) et le deuxième repère ( M2 ) sont dans un plan.

7. Boîtier ( VG ) de distributeur suivant l'une des revendications précédentes,
**caractérisé en ce,**
**qu'**au moins l'un des repères ( M1 ) a une ouverture ( OEF ) ou un tenon au moyen duquel un plomb peut être fixé de sorte que les repères ( M1, M2 ) peuvent être dirigés le long du fil à plomb.
